# EUROPÄISCHE PATENTSCHRIFT

(11) **EP 2 308 749 B1**
(45) Veröffentlichungstag und Bekanntmachung des Hinweises auf die Patenterteilung: **07.06.2017**
(21) Anmeldenummer: 10181837.5
(22) Anmeldetag: 29.09.2010
(51) Int. Cl.: B62K 21/18, B62K 21/16

(54) **Lenkervorbau für Fahrradlenker**
Stem for bicycle handlebars
Potence de guidon pour un guidon de vélo

(30) Priorität: 08.10.2009 DE 202009013592 U
(43) Veröffentlichungstag der Anmeldung: 13.04.2011
(73) Patentinhaber: Canyon Bicycles GmbH, 56073 Koblenz (DE)
(72) Erfinder: Thoma, Vincenz, 56068 Koblenz (DE)
(74) Vertreter: dompatent von Kreisler Selting Werner - Partnerschaft von Patent- und Rechtsanwälten mbB

(56) Entgegenhaltungen:
- DE-U1- 29 603 545
- NL-C1- 2 000 721
- US-A1- 2004 182 194

## Beschreibung

Die Erfindung betrifft einen Lenkervorbau für Fahrradlenker,

Ein moderner Lenkervorbau weist ein erstes, üblicherweise schellenartig ausgebildetes Klemmelement auf. Über dieses Klemmelement wird der Lenkervorbau klemmend mit dem Gabelschaft verbunden. Über ein zweites Klemmelement wird der Lenker gehalten. Das zweite Klemmelement ist hierbei häufig zweiteilig oder mehrteilig ausgebildet. Ein erstes mit dem Lenker verbundenes schalenförmiges Teil dient zur Aufnahme des Lenkers. Über ein oder zwei im Wesentlichen halbringförmige Elemente erfolgt sodann ein Fixieren des Lenkers, durch vier Halteschrauben. Ferner weist der Lenkervorbau ein einstückig mit dem ersten und zweiten Klemmelement ausgebildetes Zwischenelement auf. Der Neigungswinkel des Lenkervorbaus in montiertem Zustand, sowie die Länge des Lenkervorbaus beeinflussen die Sitzposition erheblich. Zur Verbesserung der Sitzposition ist es daher häufig erforderlich, den Lenkervorbau auszutauschen. Dies stellt einen erheblichen Montageaufwand dar. Ferner ist das vollständige Austauschen eines Lenkervorbaus relativ teuer, da es sich hierbei um ein Bauteil handelt, das erhebliche Kräfte aufnehmen muss und aus Gründen der Gewichtsersparnis möglichst leicht sein soll.

Zur Veränderung der Neigung des Lenkehrvorbaus sind beispielsweise aus DE 2 011 583 und US 2006/0097474 schwenkbare Lenkervorbauten bekannt.

Diese weisen im Bereich des ersten Klemmelements, über das der Lenkervorbau mit dem Gabelschaft verbunden wird, ein Gelenk mit einer horizontalen Achse auf. Ein derartiger Lenkervorbau weist den Nachteil auf, dass er sehr schwer ist. Ferner ist es nur möglich, die Neigung des Vorbaus jedoch nicht die Vorbaulänge zu verändern.

Ferner ist aus WO 95/25034 ein längenverstellbarer Lenkervorbau bekannt. Der Lenkervorbau weist ein erstes Klemmelement zum Verbinden mit dem Gabelschaft und ein zweites Klemmelement zum Halten eines Lenkers auf. Die beiden Klemmelemente weisen jeweils einen rohrförmigen Ansatz auf. Die beiden Ansätze können ineinander gesteckt werden. Einer der beiden Ansätze ist in Längsrichtung geschlitzt, um den anderen Ansatz klemmend fixieren zu können. Die Länge des Vorbaus kann hierbei dadurch variiert werden, dass die Ansätze beispielsweise zusammengesteckt oder auseinandergezogen sind. Auch bei diesem Lenkervorbau handelt es sich um einen sehr schweren Lenkervorbau.

Ferner ist aus US 2004/0182194 ein dreiteiliger Lenkervorbau bekannt. Dieser weist ein erstes Klemmelement zum Verbinden mit einem Gabelschaft und ein zweites Klemmelement zum Halten eines Lenkers auf. Zwischen den beiden Klemmelementen ist ein rohrförmiges Zwischenelement angeordnet. Das Zwischenelement wird jeweils in Ausnehmungen der beiden Klemmelemente gesteckt. Die Fixierung des Zwischenelements in den Klemmelementen erfolgt durch Klemmen, wobei das klemmende Fixieren des Lenkers bzw. des Gabelschafts gleichzeitig ein Klemmen des Zwischenelements bewirkt. Wenngleich dieser Lenkervorbau relativ leicht ist, besteht der Nachteil, dass eine sichere Fixierung nicht gewährleistet ist. Vielmehr besteht die Gefahr, dass das Zwischenelement aus einem der beiden Klemmelemente herausrutscht.

Des Weiteren sind aus NL 2000721 und DE 296 03 545 verschwenkbare Lenkervorbauten bekannt.

Aufgabe der Erfindung ist es, einen Lenkervorbau für Fahrradlenker zu schaffen, der auf einfache Weise, insbesondere hinsichtlich seiner Länge anpassbar ist.

Die Lösung der Aufgabe erfolgt erfindungsgemäß durch die Merkmale des Anspruchs 1.

Der erfindungsgemäße Lenkervorbau für Fahrradlenker weist ein erstes Klemmelement zum Verbinden mit dem Gabelschaft und ein zweites Klemmelement zum Halten des Lenkers auf. Die beiden Klemmelemente können hierbei entsprechend wie bei herkömmlichen Lenkervorbauten ausgebildet sein, wobei das erste Klemmelement insbesondere schellenartig und das zweite Klemmelement insbesondere mehrteilig mit zusammenzufügenden Halbschalen ausgebildet ist. Zwischen dem ersten und zweiten Klemmelement ist erfindungsgemäß ein Zwischenelement angeordnet, wobei das Zwischenelement mit beiden Klemmelemente lösbar verbunden ist. Hierdurch ist ein einfaches Austauschen des Zwischenelements möglich. Bereits bei dieser Ausführungsform ist es auf einfache Weise möglich, Zwischenelemente unterschiedlicher Länge vorzusehen und somit unterschiedlich lange Lenkervorbauten zu realisieren. Die erfindungsgemäße Fixierung des Zwischenelements an beiden Klemmelementen erfolgt durch miteinander Verspannen der Klemmelemente durch ein Halteelement. Durch das Halteelements ist das Zwischenelement vorzugsweise durch Verspannen klemmend fixiert. Das Halteelement, bei dem es sich insbesondere um einen Bolzen oder eine Schraube handelt, verläuft vorzugsweise in Längsrichtung des Zwischenelements. Das Zwischenelement, das insbesondere hohl ausgebildet ist, umgibt hierbei in bevorzugter Ausführungsform das Halteelement, so dass das Halteelement innerhalb des Zwischenelements angeordnet ist.

Bei einer bevorzugten Weiterbildung der Erfindung ist das Halteelement mit beiden Klemmelementen über eine Verspannfläche gehalten. Diese Verspannfläche, die vorzugsweise innerhalb des Klemmelements angeordnet ist, dient beispielsweise zur Anlage eines Bolzenkopfes. Der Bolzenkopf zieht somit das Klemmelement in Richtung des anderen Klemmelements. Das zweite Klemmelement kann eine entsprechende Verspannfläche aufweisen, so dass beispielsweise eine Bolzenmutter anliegt. In bevorzugter Weiterbildung weist das zweite Klemmelement jedoch ein Fixierelement auf, wobei das Fixierelement derart ausgebildet ist, dass das Halteelement in unterschiedlichen Stellungen gehalten wird, um ein Zusammenziehen der beiden Klemmelemente zu ermöglichen. Beispielsweise ist das Fixierelement als Innengewinde in einer Öffnung des Klemmelements ausgebildet. Bei dieser besonders bevorzugten Ausführungsform ist das Halteelement somit als Zuganker oder Spannschraube ausgebildet, wobei das kopfförmige Ende des Halteelements an der Verspannfläche anliegt und das andere Ende mit dem Fixierelement zusammenwirkt. Die Verspannfläche und/oder das Fixierelement können an den Klemmelementen durch Zwischenböden oder dergleichen ausgebildet sein und sind somit vorzugsweise innerhalb der Klemmelemente angeordnet.

Bei der Erfindung ist das Zwischenelement mit beiden Klemmelementen lösbar verbunden. Dies hat insbesondere Kostenvorteile, da zum verändern der Länge des Lenkervorbaus lediglich das Zwischenelement ausgetauscht werden muss.

Vorzugsweise ist das Zwischenelement, sowie auch das erste und/oder das zweite Klemmelement derartig ausgebildet, dass eine formschlüssige Verbindung zwischen den Elementen realisierbar ist. Durch ein entsprechendes formschlüssiges Zusammenstecken ist ein Verdrehen des Zwischenelements um dessen Längsachse vermieden. Hierdurch ist nicht nur eine exakte Montage sichergestellt, sondern auch die Übertragung von Kräften und Momenten von dem Lenker in das erste mit dem Gabelschaft verbundene Klemmelement sichergestellt. Aufgrund der formschlüssigen Verbindung zwischen dem Zwischenelement und einem oder beiden Klemmelementen ist eine Fixierung der Elemente zueinander in Längsrichtung, die ein Auseinanderrutschen der Elemente vermeidet, ausreichend. Eine Klemmung in Umfangrichtung muss nicht erfolgen, da Momente um die Längsachse des Zwischenelements aufgrund der Formschlüssigkeit übertragen werden können.

Bevorzugt ist es hierbei, dass das Zwischenelement über die beiden Klemmelemente zusammensteckbar ist. Dies erfolgt insbesondere dadurch, dass das Zwischenelement oder zumindest eines der beiden Klemmelemente eine Ausnehmung aufweist, in die ein entsprechend mit dem Klemmelement oder Zwischenelement verbundener Ansatz einsteckbar ist. Hierbei entspricht die Aussenkontur des Absatzes im wesentlichen der Innenkontur der Ausnehmung mit geringfügigem Spiel, um beim Zusammenstecken eine formschlüssige Verbindung zu realisieren. Der Ansatz, der hierbei an dem Zwischenelement oder an einem der beiden Klemmelemente beziehungsweise an beiden Klemmelementen vorgesehen sein kann, dient somit als Verbindungszapfen. Der Ansatz und die Ausnehmung sind vorzugsweise derart aufeinander abgestimmt, dass ein allseitiges Anliegen gewährleistet ist. Hierdurch ist eine gute Übertragung von Kräften und Momenten über eine möglichst große Anlagefläche gewährleistet.

In besonders bevorzugter Ausführungsform ist das Zwischenelement rohrförmig ausgebildet und weist insbesondere in Längsrichtung einen konstanten Querschnitt auf. Hierbei handelt es sich bei dem Zwischenelement vorzugsweise um ein einfaches rohrförmiges Extrusionsprofil. Es ist somit einfach und kostengünstig möglich, Zwischenelemente unterschiedlicher Länge herzustellen, wobei derartige Zwischenelemente sodann mit beiden Klemmelementen über Zusammenstecken miteinander verbunden sind. Die Ansätze, beziehungsweise Verbindungszapfen sind für diese Ausführungsform sodann an den beiden Klemmelementen vorgesehen, sodass zur Montage das Zwischenelement auf den Ansatz des ersten Klemmelements aufgesteckt und sodann das zweite Klemmelement in das offene Ende des Zwischenelements eingesteckt wird.

Im nächsten Schritt muss sodann lediglich noch eine Fixierung der beiden Klemmelemente in Längsrichtung des Zwischenelements erfolgen, um ein Auseinanderrutschen der Elemente zu vermeiden. Dies kann beispielsweise durch eine Klammer, einen Hebel oder ein anderes geeignetes Halteelement erfolgen. Bevorzugt ist hierbei die Verbindung mit mindestens einer Schraube als Halteelement. Hierbei ist es möglich, dass mehrere ausserhalb des Zwischenelements angeordnete Halteelemente vorgesehen sind. Besonders bevorzugt ist jedoch die Verwendung eines einzigen Halteelements, das insbesondere mittig innerhalb des Zwischenelements angeordnet ist. Das Halteelement erstreckt sich somit von einem Klemmelement zu dem anderen Klemmelement durch das Zwischenelement hindurch. Zur Fixierung des Zwischenelements ist es sodann ausreichend, wenn das Halteelement beispielweise eine Verdickung wie ein Schraubenkopf aufweist, der in einem Klemmelement gehalten ist und das Halteelement in dem anderen Klemmelement fixiert wird. Die Fixierung kann durch eine Rastverbindung, vorzugsweise jedoch durch eine Schraubverbindung, erfolgen. Besonders bevorzugt ist es hierbei, dass das schraubenförmige Halteelement von aussen durch eine Durchgangsbohrung des zweiten Klemmelements in das Zwischenelement eingeführt und in eine Gewindebohrung, die in dem ersten Klemmelement vorgesehen ist, eingeschraubt wird. Hierdurch ist eine äußerst einfache Montage und Demontage zum Auswechseln unterschiedlich langer Zwischenelemente möglich. Trotz des variablen modularen Aufbaus des Lenkervorbaus und des Vorsehen eines Halteelements kann dennoch ein relativ leichter Vorbau realisiert werden.

In besonders bevorzugter Ausführungsform weist das insbesondere rohrförmig ausgebildete Zwischenelement einen im wesentlichen rechteckigen insbesondere quadratischen Querschnitt auf. Hierbei weisen die Ecken vorzugsweise Rundungen auf, um innerhalb des Zwischenstücks in Umfangsrichtung einen guten Kraftfluss zu ermöglichen. Dies kann beispielsweise auch durch einen im Wesentlichen dreieckigen oder auch vieleckigen Querschnitt mit vorzugsweise abgerundeten Ecken erzielt werden. Hierbei ist es bevorzugt, dass mindestens ein, vorzugsweise alle Seitenwände des Zwischenelements konkav ausgebildet sind.

Bei einer weiteren Weiterbildung der Erfindung kann das Zwischenelement gekröpft ausgebildet sein. Hierdurch ist es möglich, durch Austausch einzelner Zwischenelemente nicht nur die Länge des Vorbaus, sondern auch die Neigung des Vorbaus zu verändern.

Vorzugsweise handelt es sich somit bei dem erfindungsgemäßen Lenkervorbau um ein modulares System. Dieses System besteht in bevorzugter Ausführungsform aus im Wesentlichen drei Bauteilen, einem ersten Klemmelement, einem zweiten Klemmelement, sowie einem Zwischenelement, wobei die Fixierung des Zwischenelements zwischen den beiden Klemmelementen vorzugsweise durch ein als Schraube ausgebildetes zentral angeordnetes Haltelement erfolgt. Ein wesentliches Element des modularen Baukastensystems ist das Zwischenelement. Durch Auswechseln des Zwischenelements kann auf einfache Weise die Länge des Vorbaus variieret werden. Durch das zusätzliche Vorsehen von gekröpften Zwischenelementen kann auch die Neigung des Lenkervorbaus variiert werden. Gegebenenfalls könne auch unterschiedlich ausgeprägte erste Klemmelemente in dem Baukastensystem vorhanden sein. Hierbei ist es möglich, erste Klemmelemente mit unterschiedlich geneigten Ansätzen, beziehungsweise Verbindungszapfen oder dergleichen vorzusehen, sodass durch Austausch des ersten Klemmelements die Neigung des Lenkervorbaus verändert werden kann. Das zweite Klemmelement, das zum Halten des Lenkers dient, kann beispielsweise in der Form variiert werden, dass Klemmelemente für unterschiedliche Lenkerdurchmesser vorgesehen sind.

Nachfolgend wir die Erfindung an Hand einer bevorzugten Ausführungsform unter Bezugnahme auf die anliegenden Zeichnungen näher erläutert.

Es zeigen:
- Figur 1:: eine perspektivische, schematische Seitenansicht eines zusammengebauten Lenkervorbaus,
- Figur 2:: eine perspektivische Explosionsansicht des in Figur 1 dargestellten Lenkervorbaus und
- Figur 3:: eine schematische Darstellung des Querschnitts des Zwischenelements.

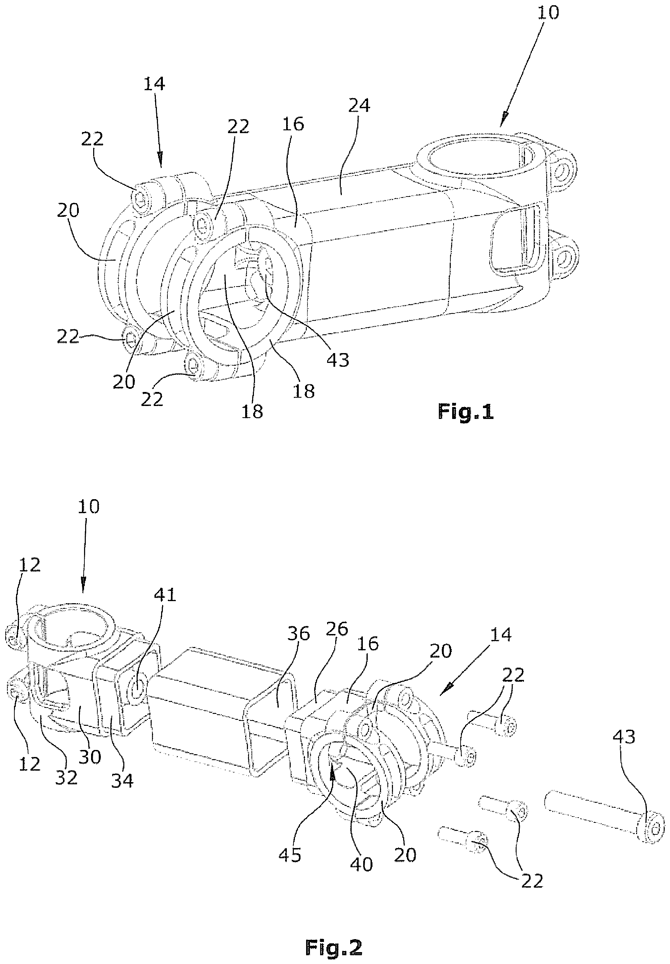

Der erfindungsgemäße Lenkervorbau weist ein erstes Klemmelement 10 auf, das zum klemmenden Befestigen des Lenkervorbaus am Gabelschaft dient. Hierzu wird das erste Klemmelement über den Gabelschaft gesteckt, sodass diese in der zylindrischen Öffnung des Gabelschaftes angeordnet ist. Anschließend werden die beiden Schrauben 12 (Figur 2) zur Fixierung des ersten Klemmelements an dem Gabelschaft angezogen. Ferner weist der Lenkervorbau ein zweites Klemmelement 14 zum Halten des Lenkers auf. Das Klemmelement 14 weist einen Hauptkörper 16 auf, der zwei halbringförmige Schalen 18 aufweist. Die halbringförmigen Schalen 18 umgebenden Lenker zur Hälfte. Zur Fixierung werden zwei einzelne halbringförmige Schalenelemente 20 den Schalen 18 gegenüber angeordnet und über Schrauben 22 fixiert.

Hierdurch ist der Lenker zwischen den schalenförmigen Elementen 18, 20 klemmend gehalten.

Zwischen den beiden Klemmelementen 10, 12 ist ein in bevorzugter Ausführungsform hohles, rohrförmig ausgebildetes Zwischenelement 24 angeordnet. Zum Fixieren des Zwischenelements 24 zwischen den beiden Klemmelementen 10, 14 weist im dargestellten Ausführungsbeispiel das zweite Klemmelement 14 einen mit dem Hauptkörper 16 verbundenen in Richtung des Halteelements 24 weisenden Ansatz 26 auf. Der Ansatz 26 weist eine Außenkontur auf, die bei geringem Spiel der Innenkontur des Zwischenelements 24 entspricht, sodass der Ansatz 26 in eine Ausnehmung beziehungsweise Öffnung 28 des Zwischenelements 24 einsteckbar ist.

Das erste Klemmelement 10 weist ebenfalls einen Hauptkörper 30 auf, der einstückig mit dem schellenartigen Element 32 ausgebildet ist. An dem Hauptkörper 30 schließt sich ein Ansatz 34 an, der entsprechend dem Ansatz 26 ausgebildet ist und ebenfalls in Richtung des Zwischenelements 24 weist. Der Ansatz 34 wird zur Montage in eine Ausnehmung 36 des Zwischenelements 36 gesteckt. Die Außenkontur des Ansatzes 34 entspricht hierbei wiederum mit geringem Spiel der Innenkontur des Zwischenelements.

Zur Fixierung des Zwischenelements 24 zwischen den beiden Klemmelementen 10, 14 ist als Halteelement im dargestellten Ausführungsbeispiel eine Schraube 38 vorgesehen. Im dargestellten Ausführungsbeispiel ist eine einzige Schraube 38 vorgesehen, die durch eine Durchgangsbohrung 40 im zweiten Klemmelement 14 gesteckt wird und in eine mittig in dem Ansatz 34 des ersten Klemmelements 10 vorgesehene Gewindebohrung 41 eingreift. Ein Schraubenkopf 43 der Schraube 38 liegt somit an einer Vorspannfläche 45, die innerhalb des zweiten Klemmelements 14 vorgesehen ist, an.

Das Austauschen des Zwischenelements 34 gegen ein beispielsweise längeres oder kürzeres Zwischenelement und/oder gegen ein gekröpftes Zwischenelement ist daher sehr einfach. Es ist lediglich erforderlich, die Schalenelemente 20 zu lösen, um den Lenker zu entfernen und sodann die Schraube 38 zu öffnen. Nach dem Lösen der Schraube 38 kann das zweite Klemmelement 14 sowie auch das Zwischenelement 24 abgezogen und durch ein anderes Zwischenelement ersetzt werden.

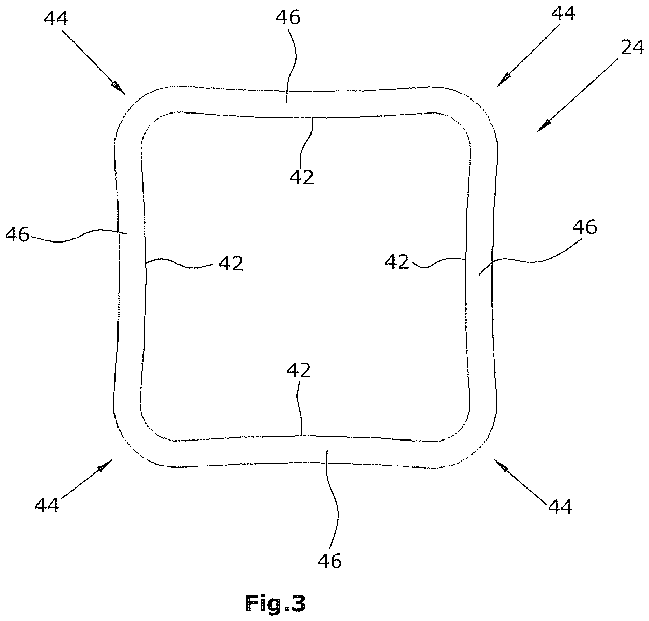

Um eine möglichst gute Übertragung von um eine Längsachse des Zwischenelements 24 auftretenden Momenten zu ermöglichen, sind die Ansätze 24, 36 vorzugsweise derartig ausgebildet, dass sie an den Innenseiten 42 (Figur 3) des Zwischenelements 24 möglichst flächig anliegen. Das Zwischenelement 24 weist im dargestellten Ausführungsbeispiel einen im wesentlichen quadratischen Querschnitt auf. Im Bereich der Ecken 44 sind Radien vorgesehen. Ferner sind die Seitenwände 46 im dargestellten Ausführungsbeispiel leicht konkav, dass heißt nach innen gewölbt ausgebildet.

## Patentansprüche

1. Lenkervorbau für Fahrradlenker, mit
einem ersten Klemmelement (10) zum Verbinden mit einem Gabelschaft,
einem zweiten Klemmelement (14) zum Halten eines Lenkers, einem zwischen den Klemmelementen (10, 14) angeordneten Zwischenelement (24), das mit mindestens einem der Klemmenelemente (10,14) lösbar verbunden ist, und
einem die beiden Klemmelemente (10, 14) miteinander verspannenden Halteelement (38), das das Zwischenelement (24) fixiert,
**dadurch gekennzeichnet, dass**
das Zwischenelement (24) mit beiden Klemmelementen (10,14) lösbar verbunden ist.

2. Lenkervorbau nach Anspruch 1, **dadurch gekennzeichnet, dass** das Zwischenelement (24) mit einem oder beiden Klemmelementen (10, 14) formschlüssig zusammensteckbar ist.

3. Lenkervorbau nach einem der Ansprüche 1 oder 2, **dadurch gekennzeichnet, dass** das Zwischenelement (24) oder zumindest eines der Klemmelemente (10, 14) eine Ausnehmung (28, 36) aufweist, in die ein mit dem Klemmelement (10, 14) oder dem Zwischenelement 24 verbundener Ansatz (26,34) einsteckbar ist.

4. Lenkervorbau nach einem der Ansprüche 1 bis 3, **dadurch gekennzeichnet, dass** das Zwischenelement (24) rohrförmig mit in Längsrichtung vorzugsweise konstantem Querschnitt ausgebildet ist.

5. Lenkervorbau nach einem der Ansprüche 1 bis 4, **dadurch gekennzeichnet, dass** ein einziges, insbesondere mittig angeordnetes Halteelement (38) vorgesehen ist.

6. Lenkervorbau nach einem der Ansprüche 1 bis 5, **dadurch gekennzeichnet, dass** das Zwischenelement (24) durch das Verspannen klemmend fixiert ist.

7. Lenkervorbau nach einem der Ansprüche 1 bis 6, **dadurch gekennzeichnet, dass** zumindest eines der beiden Klemmelemente (10, 14) eine vorzugsweise im Inneren des Klemmelements (10, 14) angeordnete Verspannfläche (45) aufweist.

8. Lenkervorbau nach einem der Ansprüche 1 bis 7, **dadurch gekennzeichnet, dass** eines der beiden Klemmelemente (10, 14) ein vorzugsweise im Inneren des Klemmelements (10, 14) angeordnetes Fixierelement (41) aufweist.

9. Lenkervorbau nach einem der Ansprüche 1 bis 8, **dadurch gekennzeichnet, dass** das Halteelement (38) durch eine Öffnung (40) in zumindest einem der beiden Klemmelemente (10, 14) geführt ist.

10. Lenkervorbau nach einem der Ansprüche 1 bis 9, **dadurch gekennzeichnet, dass** das Zwischenelement (24) einen im wesentlichen rechteckigen Querschnitt aufweist und/oder das mindestens eine Seitenwand (46) des Zwischenelements (24) konkav ausgebildet ist.

## Claims

1. Stem for bicycle handlebars, comprising
a first clamping element (10) for connection to a steer tube,
a second clamping element (14) for holding a handlebar,
an intermediate element (24) arranged between the clamping elements (10, 14), which is releasably connected to at least one of the clamping elements (10, 14), and
a holding element (38) joining the two clamping elements (10, 14) with each other, the holding element fixing the intermediate element (24),
**characterized in that**
the intermediate element (24) is releasably connected to both clamping elements (10, 14).

2. Stem of claim 1, **characterized in that** the intermediate element (24) is configured to be assembled with one or both clamping elements (10, 14) in a form-fitting manner.

3. Stem of one of claims 1 or 2, **characterized in that** the intermediate element (24) or at least one of the clamping elements (10, 14) has a recess (28, 36) into which a protrusion (26, 34) can be plugged that is connected to the clamping element (10, 14) or the intermediate element (24).

4. Stem of one of claims 1 to 3, **characterized in that** the intermediate element (24) is of a tubular design with a cross section that is preferably constant in the longitudinal direction.

5. Stem of one of claims 1 to 4, **characterized in that** a single, in particular centrally arranged holding element (38) is provided.

6. Stem of one of claims 1 to 5, **characterized in that** the intermediate element (24) is clampingly fixed by said joining.

7. Stem of one of claims 1 to 6, **characterized in that** at least one of the two clamping elements (10, 14) has a joining surface (45) preferably arranged inside the clamping element (10, 14).

8. Stem of one of claims 1 to 7, **characterized in that** one of the two clamping elements (10, 14) has a fixing element (41) preferably arranged inside the clamping element (10, 14).

9. Stem of one of claims 1 to 8, **characterized in that** the holding element (38) is guided through an opening (40) in at least one of the two clamping elements (10, 14).

10. Stem of one of claims 1 to 9, **characterized in that** the intermediate element (24) has a substantially rectangular cross section and/or that at least one side wall (46) of the intermediate element (24) is concave.

## Revendications

1. Potence de guidon pour un guidon de vélo, comprenant
un premier élément de serrage (10) pour raccordement à une tige de fourche,
un second élément de serrage (14) pour retenir un guidon,
un élément intermédiaire (24) disposé entre les éléments de serrage (10, 14),
qui est relié de façon amovible à au moins l'un des éléments de serrage (10, 14), et
un élément de retenue (38) retenant ensemble par serrage les deux éléments de serrage (10, 14) et qui fixe l'élément intermédiaire (24),
**caractérisée en ce que**
l'élément intermédiaire (24) est relié de façon amovible aux deux éléments de serrage (10, 14).

2. Potence de guidon selon la revendication 1, **caractérisée en ce que** l'élément intermédiaire (24) est emboîtable par complémentarité de forme avec l'un ou les deux éléments de serrage (10, 14).

3. Potence de guidon selon l'une des revendications 1 ou 2, **caractérisée en ce que** l'élément intermédiaire (24) ou au moins l'un des éléments de serrage (10, 14) présente un évidement (28, 36) dans lequel peut être enfiché un embout (26, 34) relié à l'élément de serrage (10, 14) ou à l'élément intermédiaire (24).

4. Potence de guidon selon l'une des revendications 1 à 3, **caractérisée en ce que** l'élément intermédiaire (24) est de forme tubulaire et sa section transversale est, de préférence, constante dans la direction longitudinale.

5. Potence de guidon selon l'une des revendications 1 à 4, **caractérisée en ce qu'**est prévu un élément de retenue (38) unique, en particulier disposé centralement.

6. Potence de guidon selon l'une des revendications 1 à 5, **caractérisée en ce que** l'élément intermédiaire (24) est fixé par serrage.

7. Potence de guidon selon l'une des revendications 1 à 6, **caractérisée en ce qu'**au moins l'un des deux éléments de serrage (10, 14) présente une surface de serrage (45) disposée, de préférence, à l'intérieur de l'élément de serrage (10, 14).

8. Potence de guidon selon l'une des revendications 1 à 7, **caractérisée en ce que** l'un des deux éléments de serrage (10, 14) présente un élément de fixation (41) disposé, de préférence, à l'intérieur de l'élément de serrage (10, 14).

9. Potence de guidon selon l'une des revendications 1 à 8, **caractérisée en ce que** l'élément de retenue (38) est inséré à travers une ouverture (40) ménagée dans au moins l'un des deux éléments de serrage (10, 14).

10. Potence de guidon selon l'une des revendications 1 à 9, **caractérisée en ce que** l'élément intermédiaire (24) a une section transversale sensiblement rectangulaire et/ou **en ce qu'**au moins une paroi latérale (46) de l'élément intermédiaire (24) est réalisée de manière concave.
